# EUROPEAN PATENT APPLICATION

(11) **EP 2 112 034 A1**
(43) Date of publication of application: **28.10.2009**
(21) Application number: 09158275.9
(22) Date of filing: 20.04.2009
(51) Int. Cl.: B60R 22/38

(54) **Webbing retractor**

(30) Priority: 22.04.2008 JP 2008111635
(71) Applicant: KABUSHIKI KAISHA TOKAI RIKA DENKI SEISAKUSHO, Niwa-gun, Aichi-ken 480-0195 (JP)
(72) Inventor: Mori, Shinji, Aichi-ken Aichi 480-0195 (JP)
(74) Representative: Rüger, Barthelt & Abel Patentanwälte

(57) **Abstract**

A webbing retractor (10) is provided that can structure a WSIR mechanism with a small number of parts. When a second gear (100), that is pivotally-supported so as to rotate freely at a trigger lever (94), revolves around a first gear (72) while rotating around a shaft (74), the trigger lever (94) pulls a lock pawl (60) via a link (90) and causes the lock pawl (60) to mesh with a lock base (62), and rotation of a spool (20) in a pull-out direction is restricted. With such a structure, a structure corresponding to a ring gear of a planetary gear train is not needed, and a locking mechanism can be structured by a small number of parts.

## Description

### BACKGROUND OF THE INVENTION

### Field of the Invention

The present invention relates to a webbing retractor for taking-up and storing a webbing belt that restrains the body of a vehicle occupant who is seated on the seat of a vehicle. In particular, the present invention relates to a webbing retractor that can suppress pulling-out of the webbing belt in a state of rapid deceleration of the vehicle.

### Related Art

A webbing retractor that structures a seat belt device of a vehicle has a locking mechanism that, in a state of rapid deceleration of the vehicle, restricts pulling-out of a webbing belt that is applied to the body of a vehicle occupant so as to prevent or effectively suppress inertial movement of the body of the vehicle occupant toward the vehicle front side. Among this type of locking mechanism, there is a locking mechanism (a so-called "WSIR mechanism") that operates on the basis of a large tensile force that is imparted to the webbing belt at the time when the webbing belt starts to be pulled-out rapidly. An example thereof is disclosed in following Patent Document 1 (Japanese Patent Application Publication (JP-B) No. 7-80441).

The locking mechanism disclosed in Patent Document 1 is provided with a so-called planetary gear train. The sun gear structuring the planetary gear train is connected coaxially and integrally to a spool. The planetary gear that meshes with the sun gear is pivotally-supported so as to rotate freely at the pin of a plate that is provided coaxially with and able to rotate relative to the spool, at the side of the planetary gear train along the axial direction of the spool. Further, the planetary gear train has a ring gear that is able to rotate relative to and coaxially with the sun gear. Internal teeth of the ring gear mesh with the planetary gear.

When the webbing belt (called "seat belt" in Patent Document 1) is pulled-out from the spool and the spool is rotated in the pull-out direction, the sun gear rotates in the pull-out direction. This rotation of the sun gear is transmitted to the planetary gear, and further, is transmitted to the ring gear. In a case in which the spool rotates in the pull-out direction due to usual pulling-out of the webbing belt, such as in cases in which the vehicle occupant puts-on the webbing belt or the like, the rotation of the sun gear is transmitted to the planetary gear as described above, but the planetary gear merely rotates around its own rotation axial center, i.e., around the pin formed at the plate, and does not revolve around the sun gear.

In contrast, when the spool rotates rapidly in the pull-out direction and this large rotational force is transmitted to the planetary gear via the sun gear, the planetary gear revolves around the sun gear while also rotating. Due to the planetary gear revolving, the plate, at which the pin that supports the planetary gear is formed, rotates. Due to this rotation of the plate, a pawl for locking meshes-together with an external tooth of a ratchet wheel that is integral with the spool, and restricts rotation of the ratchet wheel in the pull-out direction, and accordingly, rotation of the spool in the pull-out direction.

In this way, the structure disclosed in Patent Document 1 utilizes a planetary gear train, but restricting of the revolution of the planetary gear at usual times depends on the mass of the ring gear (and accordingly, the body that has the ring gear). Therefore, the ring gear (and accordingly, the body that has the ring gear) must be provided, and as a result, many parts having large shapes are required.

### SUMMARY OF THE INVENTION

In view of the aforementioned, the present invention is to provide a webbing retractor that can structure a WSIR mechanism by few parts.

A webbing retractor relating to the present invention of a first aspect has: a spool at which a base end portion in a longitudinal direction of an elongated strip-shaped webbing belt is anchored, the spool taking up the webbing belt from the base end portion in the longitudinal direction by rotating in a take-up direction that is one direction around a rotation axis of the spool; a locking member that, by moving in a locking direction, engages the spool one of directly or indirectly, and restricts rotation of the spool in a pull-out direction opposite to the take-up direction; a first rotating body mechanically connected to the spool, that rotates around a rotation axis of the first rotating body due to a rotation of the spool; a supporting member including a mounting portion, the mounting portion being supported so as to rotate freely around a rotation axis of the supporting member, an axial direction of the rotation axis of the supporting member being in the same direction as the axial direction of the rotation axis of the first rotating body, the supporting member moving the locking member in the locking direction by rotating in one direction around the rotation axis of the supporting member at the mounting portion; and a second rotating body that, in a state of being engaged with the first rotating body, is supported at the supporting member at a position different from that of the mounting portion so as to freely rotate around a rotation axis of the second rotating body, an axial direction of the rotation axis of the second rotating body being in the same direction as the axial direction of the rotation axis of the first rotating body, and rotates around the rotation axis of the second rotating body by receiving a rotation of the first rotating body, the second rotating body revolving around the rotation axis of the supporting member thereby the second rotating body rotating the supporting member in the one direction around the rotation axis of the supporting member, a mass of the second rotating body being set such that, due to a rotation of a predetermined magnitude or greater of the first rotating body, which is interlocked with a rotation of the spool in the pull-out direction, the second rotating body can revolve around the rotation axis of the supporting member at the mounting portion when the second rotating body rotates around the rotation axis of the second rotating body.

In accordance with the webbing retractor relating to the invention of the first aspect, when the spool rotates in the pull-out direction that is opposite to the take-up direction due to the webbing belt being pulled-out from the spool, interlockingly with the rotation of the spool, the first rotating body rotates around the axis whose axial direction is the same direction as the axial direction of the spool. The second rotating body, that is supported at the supporting member, engages with the first rotating body and receives the rotation of the first rotating body, and the second rotating body rotates around a supporting portion thereof at the supporting member.

The mounting portion of the supporting member that supports the second rotating body is mounted so as to rotate freely around the axis whose axial direction is the same direction as the rotation axis direction of the spool. Therefore, usually, even if the first rotating body rotates, the supporting member does not rotate around the rotation axis at the mounting portion because the second rotating body, that receives the rotation of the first rotating body, only rotates around its axis.

Here, when, due to the webbing belt being pulled-out rapidly, the spool rotates in the pull-out direction at a speed that is greater than or equal to a predetermined magnitude and the first rotating body rotates interlockingly therewith, the second rotating body revolves around the rotation axis at the mounting portion of the supporting member at the same time as rotating around its axis. Because the second rotating body is supported at the supporting member as described above, due to the second rotating body revolving, the supporting member rotates in the one direction around the rotation axis at the mounting portion. Due to this rotation of the supporting member, the locking member is moved in the locking direction.

When the locking member moves in the locking direction, the locking member engages either directly or indirectly with the spool, and rotation of the spool in the pull-out direction is restricted by the locking member. Due thereto, in a case in which, for example, a vehicle occupant starts to move inertially toward the front of the vehicle at the time of rapid deceleration of the vehicle, and the webbing belt that is applied to the body of the vehicle occupant is pulled rapidly, the locking member restricts rotation of the spool in the pull-out direction. Therefore, the webbing belt is not pulled-out from the spool, and the body of the vehicle occupant is strongly restrained by the webbing belt.

Here, the mass is set such that the second rotating body does not revolve due to rotation that is less than a predetermined magnitude of the first rotating body. Therefore, there is no particular need for a member for restricting revolution of the second rotating body such as, for example, the ring gear or the body of the planetary gear train in aforementioned Patent Document 1, and a smaller number of parts suffices.
Further, in the webbing retractor relating to the invention of the first aspect, it is possible that the rotation axis of the supporting member is coaxial to the rotation axes of the spool and the first rotating body.
Further, in the webbing retractor relating to the invention of the first aspect, it is possible that a link member connects the vicinity of a first end portion in a longitudinal direction of the supporting member and the vicinity of a first end portion in a longitudinal direction of the locking member so as to be rotatable respectively, and the second rotating body is supported at the vicinity of a second end portion in the longitudinal direction of the supporting member. Further, in the webbing retractor relating to the invention of the first aspect, it is possible that the position of the rotation axis of the supporting member is set between the first end portion in the longitudinal direction and the second end portion in the longitudinal direction.
Further, in the webbing retractor relating to the invention of the first aspect, it is possible that the first rotating body is a gear having external teeth formed at an outer peripheral portion thereof and the second rotating body is a gear having external teeth that mesh with the external teeth of the first rotating body.

In a webbing retractor relating to the present invention of a second aspect, in the invention of the first aspect, a position of the rotation axis of the supporting member is set at a radial direction outer side of at least one of the spool or the first rotating body with respect to the rotation axis of the at least one of the spool or first rotating body.

In the webbing retractor relating to the invention of the second aspect, the position of the rotation axis of the supporting member is set at the radial direction outer side of at least one of the spool or the first rotating body with respect to the rotation axis thereof. Therefore, the supporting member is not disposed coaxially with respect to the one of the spool or the first rotating body whose rotation axis does not coincide with the rotation axis of the supporting member. Due thereto, it is possible to suppress an increase in the size of the device along the axial direction of the spool or the first rotating body that is caused by the supporting member being disposed so as to be lined-up coaxially along the axial direction of the spool or the first rotating body.

In a webbing retractor relating to the present invention of a third aspect, in the invention of the second aspect, the first rotating body is a gear having an outer peripheral portion at which external teeth are formed, and the second rotating body is a gear having external teeth that mesh with the external teeth of the first rotating body, the position of the rotation axis of the supporting member is set at the radial direction outer side of the first rotating body with respect to the rotation axis of the first rotating body, and the supporting member is set such that meshing of the first rotating body with the second rotating body is maintained during a state in which the supporting member has moved the locking member in the locking direction.

In the webbing retractor relating to the invention of the third aspect, the first rotating body and the second rotating body are respectively gears having external teeth at the outer peripheral portions thereof, and the first rotating body and the second rotating body mesh with one another. Due thereto, the second rotating body receives the rotation of the first rotating body and rotates around its axis, without great slippage or the like arising at the second rotating body with respect to the first rotating body.

On the other hand, when, due to the webbing belt being pulled-out rapidly, the spool rotates in the pull-out direction at a speed that is greater than or equal to a predetermined magnitude and the first rotating body rotates interlockingly therewith, the second rotating body revolves around the rotation axis at the mounting portion of the supporting member while rotating around its axis.

Here, the position of the rotation axis of the supporting member is set at the outer side in the radial direction of the first rotating body, with respect to the rotation axis of the first rotating body. Therefore, at the time when the second rotating body revolves around the rotation axis at the mounting portion of the supporting member, the second rotating body does not revolve around the first rotating body, and, due to the revolution, the second rotating body starts to move away from the first rotating body. However, in the webbing retractor relating to the present aspect, the supporting member is set such that, in the state in which the supporting member has moved the locking member in the locking direction, the meshing-together of the first rotating body and the second rotating body is maintained. Therefore, the meshing-together of the first rotating body and the second rotating body at the time when the second rotating body revolves, is not cancelled inadvertently.
Further, in the webbing retractor relating to the invention of the second aspect or third aspect, it is possible that a pushing portion that pushes the locking member due to rotation of the supporting member is formed at a first end portion in a longitudinal direction of the supporting member, and the second rotating body is supported at the vicinity of a second end portion in the longitudinal direction of the supporting member.
Also, it is possible that the position of the rotation axis of the supporting member is set between the first end portion in the longitudinal direction and the second end portion in the longitudinal direction.

As described above, the webbing retractor relating to the present invention can structure a WSIR mechanism with a small number of parts.

### BRIEF DESCRIPTION OF THE DRAWINGS

Exemplary embodiments of the invention will be described in detail with reference to the following figures, wherein:
Fig. 1 is a side view schematically showing the structure of main portions of a webbing retractor relating to a first exemplary embodiment of the present invention;
Fig. 2 is a side view corresponding to Fig. 1 and showing a state in which rotation of a spool in a pull-out direction is restricted by a locking member;
Fig. 3 is a front sectional view schematically showing the overall structure of the webbing retractor relating to the first exemplary embodiment of the present invention;
Fig. 4 is a side view schematically showing the structure of main portions of a webbing retractor relating to a second exemplary embodiment of the present invention; and
Fig. 5 is a side view corresponding to Fig. 1 and showing a state in which rotation of the spool in the pull-out direction is restricted by the locking member.

### DETAILED DESCRIPTION OF THE INVENTION

### <Structure of First Exemplary Embodiment>

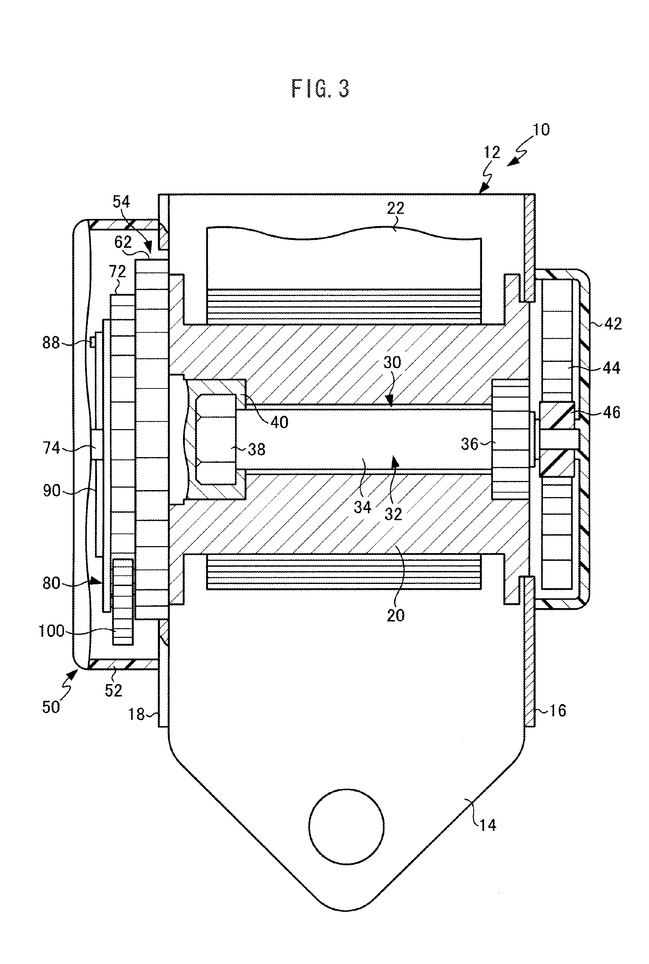

An overview of the overall structure of a webbing retractor 10 relating to a first exemplary embodiment of the present invention is shown by a front sectional view in Fig. 3.

As shown in Fig. 3, the webbing retractor 10 has a frame 12. The frame 12 has a flat-plate-shaped back plate 14. The back plate 14 is fixed to a vehicle body, for example, in a vicinity of the lower end portion of the center pillar of the vehicle, by unillustrated fastening member such as a bolt or the like. The present webbing retractor 10 is thereby mounted to the vehicle body. A pair of leg plates 16, 18, that oppose one another in the substantially longitudinal direction of the vehicle, extend-out in parallel to one another from the both transverse direction ends of the back plate 14. A spool 20, that is substantially shaped as a cylindrical tube, is disposed between the leg plates 16, 18.

The axial direction of the spool 20 is the direction in which the leg plates 16, 18 oppose one another, and the spool 20 can rotate around its own axis. Further, the longitudinal direction proximal end portion of an elongated, strip-shaped webbing belt 22 is anchored on the spool 20. Due to the spool 20 rotating in a take-up direction which is one direction around the axis thereof, the webbing belt 22 is taken-up in the form of layers from the proximal end side thereof onto the outer peripheral surface of the spool 20 and is stored thereat. Moreover, by pulling the webbing belt 22 from the distal end side thereof, the webbing belt 22 that is taken-up on the spool 20 is pulled-out, and accompanying this, the spool 20 rotates in a pull-out direction that is opposite to the take-up direction.

The webbing retractor 10 has a force limiter mechanism 30. The force limiter mechanism 30 has a torsion shaft 32 that serves as an energy absorbing portion and is disposed at the inner side of the spool 20. The torsion shaft 32 has a shaft main body 34. The shaft main body 34 is formed in the shape of a rod whose axial direction runs along the axial direction of the spool 20. A joining portion 36 is formed at the leg plate 16 side end portion of the shaft main body 34. The outer peripheral portion of the joining portion 36 is knurled, or the outer peripheral shape is formed in a non-circular shape. Due thereto, relative rotation of the torsion shaft 32 with respect to the spool 20 around the central axis of the spool 20 is not possible.

In contrast, a joining portion 38 is formed at the leg plate 18 side end portion of the shaft main body 34. The outer peripheral portion of the joining portion 38 is knurled, or the outer peripheral shape is formed in a non-circular shape. A sleeve 40 is mounted to the joining portion 38 in a state in which relative rotation with respect to the joining portion 38 around the central axis of the spool 20 is not possible. At least a portion of the sleeve 40 is fit-in into the spool 20 from the leg plate 18 side open end of the spool 20.

The outer peripheral shape of the sleeve 40 at the portion that is fit in the spool 20 is a circular shape that is coaxial to both the shaft main body 34 of the torsion shaft 32 and the spool 20. Accordingly, although the sleeve 40 itself can rotate relative to the spool 20 around the central axis of the spool 20, the torsion shaft 32 to which the sleeve 40 is joined cannot rotate relative to the spool 20. Therefore, basically, the sleeve 40 is connected integrally to the spool 20.

A spring case 42 is mounted to the leg plate 16 at the outer side of the leg plate 16 (the side of the leg plate 16 opposite the side at which the leg plate 18 is located). A spiral spring 44 is housed in the spring case 42. The end portion of the spiral spring 44 at the outer side in the direction of the spiral is anchored on the spring case 42. In contrast, the end portion of the spiral spring 44 at the inner side in the direction of the spiral is anchored on an adapter 46. The adapter 46 passes-through the leg plate 16 and is connected to one end portion of the torsion shaft 32 that projects-out to the outer side of the frame 12, coaxially and in a state in which relative rotation with respect to the torsion shaft 32 around the central axis of the torsion shaft 32 is not possible.

The spiral spring 44 has a structure in which the tightening-winding urging force increases due to the torsion shaft 32 rotating in the pull-out direction. Accordingly, when the spool 20 rotates in the pull-out direction due to the webbing belt 22 being pulled-out from the spool 20, the spiral spring 44 urges the spool 20 in the take-up direction via the torsion shaft 32. The webbing belt 22, whose state of being applied to the body of a vehicle occupant has been cancelled, is taken-up onto and stored on the spool 20 due to the urging force of the spiral spring 44.

On the other hand, a housing 52 of a locking mechanism 50 serving as a locking means (WSIR mechanism) is mounted to the leg plate 18 at the outer side of the leg plate 18 (the side of the leg plate 18 opposite the side at which the leg plate 16 is located). A lock base 54 that structures the locking mechanism 50 is provided at the inner side of the housing 52. The lock base 54 is disposed coaxially to the spool 20 at the side of the spool 20, and is mounted to the sleeve 40 in a state in which rotation relative to the sleeve 40 around the rotation axial center of the spool 20 is impossible. Therefore, the lock base 54 is integrally connected to the spool 20 via the sleeve 40 and the torsion shaft 32, and basically, the lock base 54 rotates together with the spool 20.

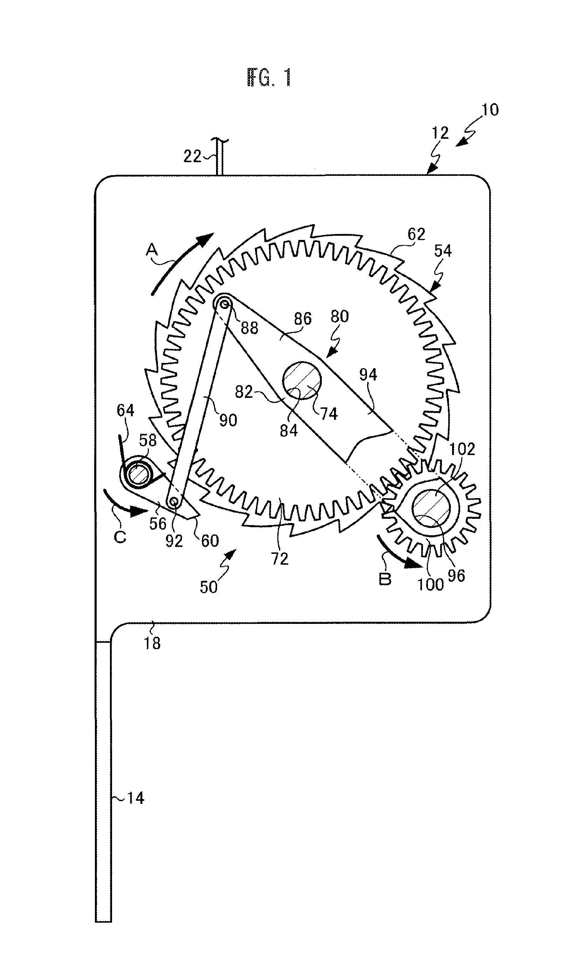

As shown in Fig. 1, a lock pawl 56, that serves as a locking member and that, together with the lock base 54, structures the locking mechanism 50, is disposed at the side of the lock base 54 along the rotation radial direction of the lock base 54. A supporting pin 58 is formed so as to project-out in correspondence with the lock pawl 56 from the surface of the leg plate 18 that is at the side opposite the side at which the leg plate 16 is located. The supporting pin 58 is formed in the shape of a solid cylinder whose axial direction runs approximately along the axial direction of the spool 20. The lock pawl 56 is supported at the supporting pin 58 so as rotate freely.

The distal end side of the lock pawl 56 is a meshing portion 60. When the lock pawl 56 rotates in one direction (the direction of arrow C in Fig. 1) around the supporting pin 58, the meshing portion 60 approaches the outer peripheral portion of the lock base 54. Ratchet teeth 62 are formed at the outer peripheral portion of the lock base 54 in correspondence with the meshing portion 60 of the lock pawl 56. Due to the lock pawl 56 rotating around the supporting pin 58 and the meshing portion 60 approaching the outer peripheral portion of the lock base 54 as described above, the meshing portion 60 can mesh together with the ratchet tooth 62. In the state in which the meshing portion 60 is meshed together with the ratchet tooth 62, rotation of the lock base 54 in the pull-out direction (i.e., rotation in the direction of arrow A in Fig. 1) is restricted by the lock pawl 56.

A torsion coil spring 64 that serves as a locking member urging member, and accordingly, a supporting member urging member, is provided at the supporting pin 58. One end of the torsion coil spring 64 is anchored on the leg plate 18, and the other end is anchored on the lock pawl 56. When the meshing portion 60 rotates in the direction of approaching the outer peripheral portion of the lock base 54, the torsion coil spring 64 urges, by its urging force, the meshing portion 60 in the direction of moving away from the outer peripheral portion of the lock base 54 (i.e., in the direction opposite arrow C in Fig. 1). Due thereto, the meshing portion 60 of the lock pawl 56 does not mesh together with the ratchet tooth 62 of the lock base 54, unless a rotational force that resists the urging force of the torsion coil spring 64 is applied.

On the other hand, a gear 72, that is spur-toothed and external-toothed, is formed coaxially and integrally with the lock base 54, at the surface of the lock base 54 at the side that is opposite the side at which the spool 20 is located. Further, a shaft 74 is formed coaxially to the gear 72, and accordingly, to the lock base 54 and the spool 20, at the surface of the gear 72 at the side that is opposite the side at which the lock base 54 is located. A trigger lever 80 serving as a supporting member is disposed at the side of the gear 72 opposite the side at which the lock base 54 is located. The trigger lever 80 is formed in the shape of a narrow-width plate whose direction of thickness runs along the axial direction of the shaft 74.

A portion of the trigger lever 80 (in the case of the trigger lever 80 of the present exemplary embodiment, a portion of the longitudinal direction intermediate portion thereof) is a mounting portion 82. A round hole 84, in which is fit the shaft 74 that has passed through the gear 72, is formed in the mounting portion 82. Due thereto, the trigger lever 80 is supported at the shaft 74 so as to rotate freely around the shaft 74. A portion of the trigger lever 80, which portion is further toward one side along the longitudinal direction than the mounting portion 82, is a link 86. A connecting pin 88 is formed in a vicinity of the end portion of the link 86 at the side opposite the side at which the mounting portion 82 is located. The connecting pin 88 is formed in the shape of a solid cylinder whose axial direction runs along the axial direction of the shaft 74. A link 90 is disposed in a vicinity of the connecting pin 88.

The link 90 is formed in the shape of a narrow-width plate whose direction of thickness runs along the axial direction of the connecting pin 88. The connecting pin 88 passes-through a vicinity of one longitudinal direction end portion of the link 90. The link 90 is connected so as to be able to rotate around the connecting pin 88 with respect to the trigger lever 80. A connecting pin 92, that is formed further toward the distal end side of the lock pawl 56 than the supporting pin 58, passes-through a vicinity of the other longitudinal direction end portion of the link 90. The connecting pin 92 is formed in the shape of a solid cylinder whose axial direction runs along the axial direction of the connecting pin 88. The link 90 is connected so as to be able to rotate around the connecting pin 92 with respect to the lock pawl 56. In this way, the trigger lever 80 and the lock pawl 56 are connected via the link 90. When the trigger lever 80 rotates in the pull-out direction, the lock pawl 56 rotates around the supporting pin 58 in the direction in which the meshing portion 60 approaches the ratchet teeth 62 of the lock base 54.

On the other hand, the side of the trigger lever 80 that is at the side opposite the link 86 with respect to the round hole 84 is a gear connecting portion 94. A round hole 96 is formed in a vicinity of the end portion of the gear connecting portion 94 which end portion is at the side opposite the side at which the round hole 84 is located. Moreover, a gear 100 serving as a second rotating body is disposed in a vicinity of the end portion of the gear connecting portion 94 which end portion is at the side opposite the side at which the round hole 84 is located. The gear 100 is an external-toothed spur gear whose axial direction is the same direction as the axial direction of the gear 72, but that has a smaller diameter than the gear 72 and whose number of teeth is fewer than that of the gear 72.

A shaft 102 is formed at the gear 100. The shaft 102 is fit-in the round hole 96, and due thereto, the gear 100 is supported so as to rotate freely at the gear connecting portion 94 (i.e., the trigger lever 80). Further, the gear 100, that is supported so as to rotate freely at the trigger lever 80 in this way, meshes-together with the gear 72, and the rotation of the gear 72 is transmitted to the gear 100 and causes the gear 100 to rotate. Because the gear 72 and the gear 100 are external-toothed spur gears as described above, the gear 100 to which the rotation of the gear 72 is transmitted rotates around the shaft 102, and the pushing force from the external teeth of the gear 72 pushes the external teeth of the gear 100 in the rotating direction of the gear 72. Therefore, the gear 100, to which the rotation of the gear 72 is transmitted, also starts to revolve (rotate) around the gear 72.

Here, the mass of the gear 100 including the shaft 102, the mass of the trigger lever 80 including the connecting pin 88, the mass of the link 90, the mass of the lock pawl 56 including the connecting pin 92, the urging force of the torsion coil spring 64, and the like are set such that the gear 100 revolves around the gear 72 only in cases in which the gear 72 rotates at a rotational force of greater than or equal to a predetermined magnitude in the pull-out direction, and, in cases in which the rotational force in the pull-out direction of the gear 72 is less than the predetermined magnitude, the gear 100 only rotates around the shaft 102 without revolving.

### <Operation and Effects of First Exemplary Embodiment>

The operation and effects of the present webbing retractor 10 will be described next through an explanation of the workings of the webbing retractor 10.

At the webbing retractor 10, when a vehicle occupant pulls the webbing belt 22 in order to put-on the webbing belt 22, a portion of the webbing belt 22 that is taken-up and stored on the spool 20 is pulled-out, and the spool 20 thereby rotates in the pull-out direction. This rotation of the spool 20 in the pull-out direction is transmitted to the gear 72 via the torsion shaft 32, the sleeve 40 and the lock base 54, and the gear 72 is rotated in the pull-out direction (the direction of arrow A in Fig. 1).

The gear 72 that rotates in the pull-out direction transmits rotation to the gear 100 that is meshed-together with the gear 72, and causes the gear 100 to rotate. However, in cases in which the rotational force in the pull-out direction that is imparted to the spool 20 is less than a predetermined magnitude, such as in cases in which the vehicle occupant pulls the webbing belt 22 in order to put-on the webbing belt 22 as described above, or the like, the gear 100 that receives the rotational force of the gear 72 does not revolve around the gear 72 due to the aforementioned relationship of the mass of the gear 100 and the like, and the gear 100 rotates in the take-up direction (the direction of arrow B in Fig. 1) around the shaft 102.

Therefore, in this state, rotation of the trigger lever 80 around the shaft 72 does not arise, and rotation of the lock pawl 56 around the supporting pin 58 against the urging force of the torsion coil spring 64 (i.e., rotation in the direction of arrow C in Fig. 1) also does not arise. Accordingly, in this state, the meshing portion 60 of the lock pawl 56 does not mesh-together with the ratchet teeth 62 of the lock base 54. Therefore, the lock base 54 can rotate in the pull-out direction, and the webbing belt 22 can be pulled-out from the spool 20.

On the other hand, when the vehicle enters into a state of rapid deceleration, the body of the vehicle occupant starts to move inertially substantially toward the front of the vehicle, and at that time, the webbing belt 22 that is applied to the body of the vehicle occupant is rapidly pulled by the body of the vehicle occupant. The webbing belt 22, to which this rapid tensile force is imparted, starts to rotate the spool 20 rapidly in the pull-out direction. If this rapid rotational force in the pull-out direction is greater than or equal to the aforementioned predetermined magnitude, the gear 100 that receives the rotational force of the gear 72 in the pull-out direction rotates in the take-up direction around the shaft 102, and at the same time, the gear 100 revolves in the pull-out direction (the direction of arrow A in Fig. 1) around the gear 72 due to the pushing force in the pull-out direction that the external teeth of the gear 100 receive from the external teeth of the gear 72.

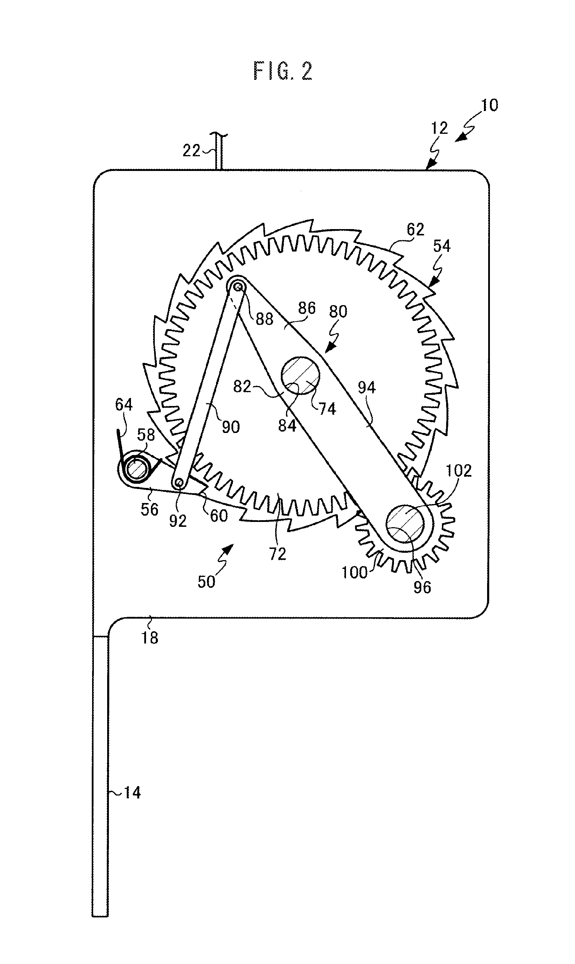

When revolution in the pull-out direction arises at the gear 100 in this way, the trigger lever 80 rotates in the pull-out direction around the shaft 74. When the link 90 is pulled due to the trigger lever 80 rotating in the pull-out direction, the lock pawl 56 rotates in the take-up direction (the direction of arrow C in Fig. 1) against the urging force of the torsion coil spring 64. Due thereto, as shown in Fig. 2, the meshing portion 60 of the lock pawl 56 meshes-together with the ratchet tooth 62 of the lock base 54. In the state in which the meshing portion 60 is meshed-together with the ratchet tooth 62, rotation of the lock base 54 in the pull-out direction is restricted.

Therefore, in this state, because rotation of the torsion shaft 32 in the pull-out direction, and accordingly, rotation of the spool 20 in the pull-out direction, is restricted, the webbing belt 22 cannot be pulled-out from the spool 20. Due to the pulling-out of the webbing belt 22 from the spool 20 being restricted in this way, the body of the vehicle occupant is strongly restrained by the webbing belt 22, and inertial movement substantially toward the front of the vehicle is prevented or effectively suppressed.

Here, the present webbing retractor 10 does not have a body that is structured to include a ring gear, which is different than the structure disclosed in aforementioned Patent Document 1. Therefore, the above-described locking mechanism (WSIR mechanism) 50 can be structured even if there are few parts, and further, even if there are few relatively large parts such as the body disclosed in Patent Document 1. Moreover, in the structure disclosed in Patent Document 1, the revolution of the planetary gear around the sun gear is restricted by the mass of the ring gear, and accordingly, the body.

Here, in Patent Document 1, the internal teeth of the ring gear that structures the body must mesh-together with the planetary gear at the rotation radial direction outer side of the sun gear. Therefore, the body must have a portion that is shaped as a cylindrical tube with a floor (or a tray) that has a relatively shallow floor. Further, the restrictions on the shape are very severe in light of the structure of the internal teeth meshing-together with the planetary gear. Accordingly, setting the mass of such a body is difficult.

In contrast, in the present webbing retractor 10, it suffices for the gear 100 to mesh-together with the gear 72. Further, the trigger lever 80 is pivotally-supported at the shaft 74 so as to rotate freely, and it suffices for the gear 100 to be supported so as to rotate freely. Moreover, it suffices for the link 90 to be connected rotatably relative to the trigger lever 80 and the lock pawl 56, and for the torsion coil spring 64 to urge the meshing portion 60 in the direction of moving away from the outer peripheral portion of the lock base 54. In this way, although there are mechanical restrictions as mentioned above on the gear 72, the torsion coil spring 64, the trigger lever 80, the link 90 and the gear 100, there are no limitations whatsoever on the shapes thereof provided that the functions thereof are satisfied. Therefore, setting of the conditions (i.e., the mass of the shaft 102 and the like) for restricting revolution of the gear 100 around the gear 72 is easy.

Moreover, in the structure disclosed in Patent Document 1, the plate, at which the pin that supports the planetary gear is formed, is disposed at one axial direction side of the sun gear, the planetary gear and the ring gear, and the axial direction other side is the body that includes the ring gear. Therefore, of the space between the ring gear and the sun gear, the region thereof other than the range of revolution of the planetary gear is a so-called "dead space" in which other parts cannot be provided, and therefore, it is difficult to make the overall device compact.

In contrast, in the present webbing retractor 10, various types of parts can be disposed at the side of the gear 72 (the side of the lock base 54) at the region other than the range of revolution of the gear 100 around the gear 72, and further, such parts can also be supported at the leg plate 18 or the housing 52. In this way, in the present webbing retractor 10, because the region at the rotation radial direction outer side of the gear 72 can be utilized effectively as space for the placement of parts or the like, the overall device can be made to be compact.

### <Structure of Second Exemplary Embodiment>

A second exemplary embodiment of the present invention will be described next. Note that, in the explanation of the present exemplary embodiment, regions that are basically the same as those of the above-described first exemplary embodiment are denoted by the same reference numerals, and detailed description thereof is omitted.

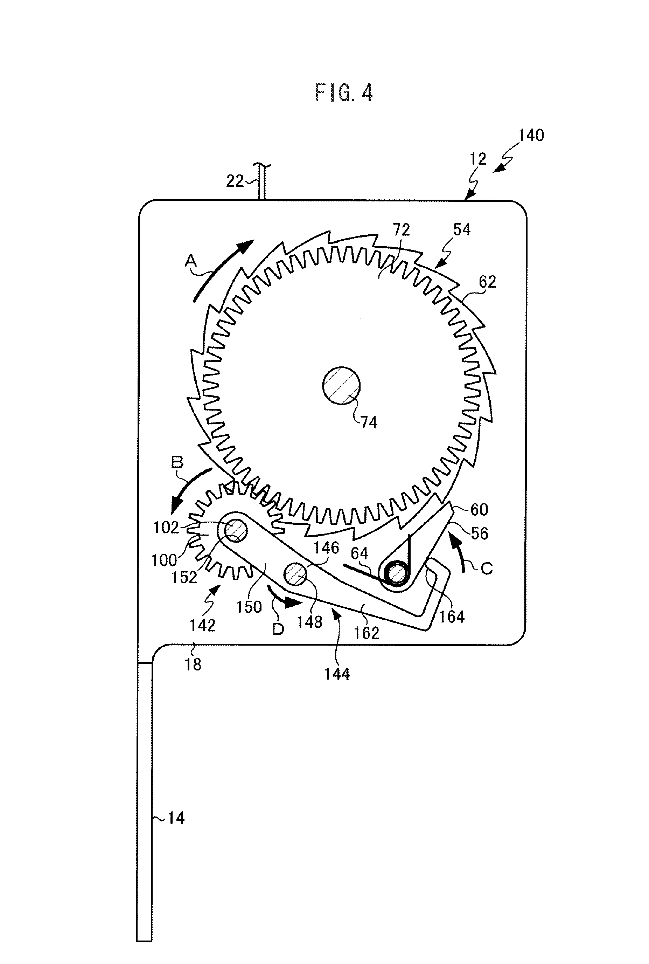

The structure of the main portions of a webbing retractor 140 relating to the present exemplary embodiment is shown in a side view in Fig. 4. As shown in Fig. 4, the webbing retractor 140 is not provided with the locking mechanism 50 as mentioned in the first exemplary embodiment of the present invention, and instead, has a locking mechanism 142 that serves as the locking means (WSIR mechanism). The locking mechanism 142 does not have the trigger lever 80 as mentioned in the first exemplary embodiment of the present invention, and instead is provided with a trigger lever 144 that serves as the supporting member. The trigger lever 144 is formed in the shape of a narrow-width plate whose direction of thickness runs along the axial direction of the shaft 74.

A portion of the trigger lever 144 (in case of the trigger lever 144 in the present exemplary embodiment, a portion of the longitudinal direction intermediate portion thereof) is a mounting portion 146. In the present webbing retractor 140, a supporting shaft 148 is formed at the leg plate 18 in correspondence with the trigger lever 144. The supporting shaft 148 is shaped as a solid cylinder whose axial direction runs along the axial direction of the shaft 74, and is formed at the outer side of the gear 72 (and accordingly, the lock base 54) along the rotation radial direction of the gear 72 (and accordingly, the lock base 54). The supporting shaft 148 passes-through the mounting portion 146 of the trigger lever 144, and the trigger lever 144 is supported at the supporting shaft 148 so as to be able to rotate around the supporting shaft 148.

The portion of the trigger lever 144 that is further toward one side than the mounting portion 146 is a gear connecting portion 150. Around hole 152 is formed in the end portion of the gear connecting portion 150 at the side opposite the side at which the mounting portion 146 is located. The shaft 102 of the gear 100 is inserted in the round hole 152, and the gear 100 is supported at the trigger lever 144 so as to rotate freely.

On the other hand, at the trigger lever 144, at the side opposite the gear connecting portion 150 with respect to the mounting portion 146, the link 86 as mentioned in the first exemplary embodiment of the present invention is not provided, and instead, a pushing piece 162 is formed. A pushing portion 164, whose distal end is bent in the shape of a hook toward the side surface of the lock pawl 56, is formed at the side of the pushing piece 162 opposite the side at which mounting portion 146 is located. The distal end portion of the pushing portion 164 contacts the side surface of the lock pawl 56 at the side opposite the outer peripheral portion side of the ratchet tooth 62. When the trigger lever 144 rotates around the supporting shaft 148 in the take-up direction (the direction of arrow D in Fig. 4), the meshing portion 60 is rotated in the direction of approaching the outer peripheral portion of the lock base 54 (in the direction of arrow C in Fig. 4).

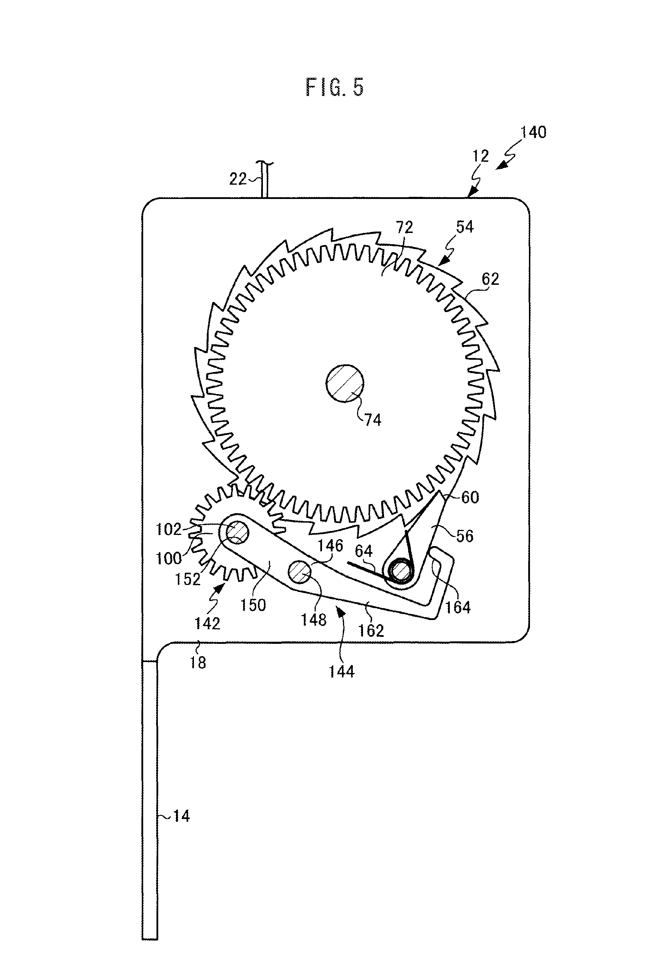

Here, as shown in Fig. 4 and Fig. 5, when the trigger lever 144 rotates around the supporting shaft 148 in the take-up direction (the direction of arrow D in Fig. 4), the gear 100 revolves around the supporting shaft 148 in the direction of moving away from the gear 72, here, the angle of rotation of the trigger lever 144 from the start of the pushing of the lock pawl 56 by the pushing portion 164 until the meshing portion 60 of the lock pawl 56 meshes-together with the ratchet tooth 62 of the lock base 54, and the like, are set such that, in the state in which the meshing portion 60 of the lock pawl 56 is meshed-together with the ratchet tooth 62 of the lock base 54, the meshing of the gear 100 and the gear 72 is not cancelled.

Further, in the present webbing retractor 140, the mass of the gear 100 including the shaft 102, the mass of the trigger lever 144 including the pushing portion 164, the mass of the lock pawl 56, the urging force of the torsion coil spring 64, and the like are set such that the gear 100 revolves around the supporting shaft 148 only in cases in which the gear 72 rotates at a rotational force of greater than or equal to a predetermined magnitude in the pull-out direction, and, in cases in which the rotational force in the pull-out direction of the gear 72 is less than the predetermined magnitude, the gear 100 only rotates around the shaft 102 without revolving.

### <Operation and Effects of Second Exemplary Embodiment>

The operation and effects of the present webbing retractor 140 will be described next through an explanation of the workings of the webbing retractor 140.

At the present webbing retractor 140, if the rotational force in the pull-out direction that is imparted to the spool 20 is less than a predetermined magnitude, the gear 100 that receives the rotational force of the gear 72 does not revolve around the supporting shaft 148 due to the aforementioned relationship of the mass of the gear 100 and the like, and the gear 100 rotates in the take-up direction (the direction of arrow B in Fig. 4) around the shaft 102. Therefore, in this state, rotation of the trigger lever 144 around the supporting shaft 148 does not arise, and the pushing portion 164 of the pushing piece 162 does not push the side surface of the lock pawl 56. Therefore, rotation of the lock pawl 56 around the supporting pin 58 against the urging force of the torsion coil spring 64 (i.e., rotation in the direction of arrow C in Fig. 4) also does not arise.

Accordingly, in this state, the meshing portion 60 of the lock pawl 56 does not mesh-together with the ratchet teeth 62 of the lock base 54, and therefore, the lock base 54 can rotate in the pull-out direction. Accordingly, the webbing belt 22 can be pulled-out from the spool 20 at times when the spool 20 is rotated in the pull-out direction by a rotational force that is less than the aforementioned predetermined magnitude, such as in cases in which a vehicle occupant pulls-out the webbing belt 22 in order to put-on the webbing belt 22, or the like.

On the other hand, when the spool 20 rotates rapidly in the pull-out direction at a rotational force that is greater than or equal to the aforementioned predetermined magnitude, the gear 100 that receives the rotational force of the gear 72 in the pull-out direction rotates in the take-up direction around the shaft 102, and at the same time, revolves in the take-up direction (the direction of arrow D in Fig. 4) around the supporting shaft 148 due to the pushing force in the pull-out direction that the external teeth of the gear 100 receive from the external teeth of the gear 72. When revolution in the take-up direction arises at the gear 100 in this way, the trigger lever 144 rotates in the take-up direction around the supporting shaft 148.

Due to the trigger lever 144 rotating in the take-up direction, the pushing portion 164 of the pushing piece 162 pushes the side surface of the lock pawl 56 against the urging force of the torsion coil spring 64. Due thereto, the lock pawl 56 rotates in the take-up direction (the direction of arrow C in Fig. 4) against the urging force of the torsion coil spring 64, and as shown in Fig. 5, the meshing portion 60 of the lock pawl 56 meshes-together with the ratchet tooth 62 of the lock base 54. In the state in which the meshing portion 60 is meshed-together with the ratchet tooth 62, rotation of the lock base 54 in the pull-out direction is restricted.

Therefore, in this state, because rotation of the torsion shaft 32 in the pull-out direction, and accordingly, rotation of the spool 20 in the pull-out direction, is restricted, the webbing belt 22 cannot be pulled-out from the spool 20. By restricting the pulling-out of the webbing belt 22 from the spool 20 in this way, the body of the vehicle occupant is restrained by the webbing belt 22, and inertial movement substantially toward the front of the vehicle is prevented or effectively suppressed.

Here, in the present webbing retractor 140, differently than the trigger lever 80 of the above-described first exemplary embodiment, the position of the rotation axial center of the trigger lever 144 is not set at the position of the axial center of the shaft 74 (i.e., the position of the rotation axial center of the spool 20), and is set at the position of the axial center of the supporting shaft 148 that is provided at the outer side of the lock base 54 along the rotation radial direction of the lock base 54. However, in the same way as the trigger lever 80, the trigger lever 144 is also shaped as a narrow-width plate, and also does not have a body that is structured to include a ring gear, that is, different than the structure disclosed in above Patent Document 1. Effects that are basically similar to the effects described in the above first exemplary embodiment can be achieved by the present webbing retractor 140.

Further, in the present webbing retractor 140, as described above, the position of the rotation axial center of the trigger lever 144 is set at the position of the axial center of the supporting shaft 148 that is provided at the outer side of the lock base 54 along the rotation radial direction of the lock base 54. Therefore, because the trigger lever 144 is not provided at the position of the axial center of the shaft 74, i.e., on the rotational axis of the spool 20, the number of parts that are lined-up on the rotational axis of the spool 20 can be reduced, and the dimension of the device overall in the direction along the rotational axis of the spool 20 can be made to be shorter.

## Claims

1. A webbing retractor comprising:
a spool at which a base end portion in a longitudinal direction of an elongated strip-shaped webbing belt is anchored, the spool taking up the webbing belt from the base end portion in the longitudinal direction by rotating in a take-up direction that is one direction around a rotation axis of the spool;
a locking member that, by moving in a locking direction, engages the spool one of directly or indirectly, and restricts rotation of the spool in a pull-out direction opposite to the take-up direction;
a first rotating body mechanically connected to the spool, that rotates around a rotation axis of the first rotating body due to a rotation of the spool;
a supporting member including a mounting portion, the mounting portion being supported so as to rotate freely around a rotation axis of the supporting member, an axial direction of the rotation axis of the supporting member being in the same direction as the axial direction of the rotation axis of the first rotating body, the supporting member moving the locking member in the locking direction by rotating in one direction around the rotation axis of the supporting member at the mounting portion; and
a second rotating body that, in a state of being engaged with the first rotating body, is supported at the supporting member at a position different from that of the mounting portion so as to freely rotate around a rotation axis of the second rotating body, an axial direction of the rotation axis of the second rotating body being in the same direction as the axial direction of the rotation axis of the first rotating body, and rotates around the rotation axis of the second rotating body by receiving a rotation of the first rotating body, the second rotating body revolving around the rotation axis of the supporting member thereby the second rotating body rotating the supporting member in the one direction around the rotation axis of the supporting member, a mass of the second rotating body being set such that, due to a rotation of a predetermined magnitude or greater of the first rotating body, which is interlocked with a rotation of the spool in the pull-out direction, the second rotating body can revolve around the rotation axis of the supporting member at the mounting portion when the second rotating body rotates around the rotation axis of the second rotating body.

2. The webbing retractor of claim 1, wherein a position of the rotation axis of the supporting member is set at a radial direction outer side of at least one of the spool or the first rotating body with respect to the rotation axis of the at least one of the spool or first rotating body.

3. The webbing retractor of claim 2, wherein:
the first rotating body is a gear having an outer peripheral portion at which external teeth are formed, and the second rotating body is a gear having external teeth that mesh with the external teeth of the first rotating body,
the position of the rotation axis of the supporting member is set at the radial direction outer side of the first rotating body with respect to the rotation axis of the first rotating body, and
the supporting member is set such that meshing of the first rotating body with the second rotating body is maintained during a state in which the supporting member has moved the locking member in the locking direction.

4. The webbing retractor of claim 2, wherein a pushing portion that pushes the locking member due to rotation of the supporting member is formed at a first end portion in a longitudinal direction of the supporting member, and the second rotating body is supported at the vicinity of a second end portion in the longitudinal direction of the supporting member.

5. The webbing retractor of claim 4, wherein the position of the rotation axis of the supporting member is set between the first end portion in the longitudinal direction and the second end portion in the longitudinal direction.

6. The webbing retractor of claim 1, wherein the rotation axis of the supporting member is coaxial to the rotation axes of the spool and the first rotating body.

7. The webbing retractor of claim 6, wherein a link member connects the vicinity of a first end portion in a longitudinal direction of the supporting member and the vicinity of a first end portion in a longitudinal direction of the locking member so as to be rotatable respectively, and the second rotating body is supported at the vicinity of a second end portion in the longitudinal direction of the supporting member.

8. The webbing retractor of claim 7, wherein the position of the rotation axis of the supporting member is set between the first end portion in the longitudinal direction and the second end portion in the longitudinal direction.

9. The webbing retractor of claim 6, wherein the first rotating body is a gear having external teeth formed at an outer peripheral portion thereof and the second rotating body is a gear having external teeth that mesh with the external teeth of the first rotating body.
